# EUROPÄISCHE PATENTSCHRIFT

(11) **EP 3 053 541 B1**
(45) Veröffentlichungstag und Bekanntmachung des Hinweises auf die Patenterteilung: **31.05.2017**
(21) Anmeldenummer: 16000130.1
(22) Anmeldetag: 20.01.2016
(51) Int. Cl.: A61C 13/00

(54) **ROHLING ZUR HERSTELLUNG EINES ZAHNERSATZES**
BLANK FOR THE MANUFACTURE OF A DENTAL PROSTHESIS
ÉBAUCHE DESTINEE A FABRIQUER UNE PROTHESE DENTAIRE

(30) Priorität: 29.01.2015 AT 382015
(43) Veröffentlichungstag der Anmeldung: 10.08.2016
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- WO-A1-2013/122662
- US-A1- 2013 224 454

## Beschreibung

Die Erfindung betrifft einen Rohling, insbesondere Dentalrohling, zur Herstellung eines Zahnersatzes, mit einem Bett aus einem ersten Material, wenigstens einem, im Bett eingebetteten, vom Bett verschiedenfarbig ausgebildeten Kernbereich aus einem zweiten Material, wobei der Kernbereich eine in Richtung Bett gerichtete Oberfläche aufweist.

Rohlinge für die Herstellung eines Zahnersatzes, welche aus verschiedenen Materialien gefertigt sind (z.B. aus verschiedenen Kunststoffen), sind schon seit geraumer Zeit bekannt. Es gibt hier beispielsweise zylindrische Scheiben, welche in axialer Richtung aus verschiedenen Schichten abgestufter Farben bestehen. Dadurch lässt sich bei dentalen Restaurationen ein natürlicherer Farbverlauf realisieren.

Ein Beispiel für eine derartige Variante geht aus der DE 10 2011 055 393 A1 und der US 2013/0224454 A1 hervor. Diese Schrift zeigt die Herstellung eines Rohlings für künstliche Zähne, wobei der Rohling einen homogenen Farbübergang aufweist und die aus dem Rohling hergestellten künstlichen Zähne dem Erscheinungsbild natürlicher Zähne nahekommen. Es gibt keine sichtbaren Trennlinien, an welchen der Farbübergang zwischen zwei farblich verschieden ausgebildeten Materialien erkennbar ist. Es können zwar die verschiedenen Profile bzw. Strukturen der Kunststoffschichten gleichmäßig oder ungleichmäßig verteilt sein, wellenförmig, pyramidenförmig, zylindrisch oder quaderförmig ausgebildet sein, wobei diese, für die Herstellung wichtigen Strukturen aber im fertigen Rohling durch den homogenen Farbübergang kaum oder gar nicht mehr zu erkennen sind.

In ähnlicher Art und Weise beschreibt das deutsche Patent DE 197 14 178 C2 ein Verfahren zur Herstellung eines mehrfarbigen Formkörpers für die Weiterverarbeitung zu einer Zahnrestauration, wobei als wesentliches Merkmal ein kontinuierlicher Farbverlauf vorhanden ist.

Demgegenüber betrifft die Erfindung weiters einen Rohling mit einer das Bett zu der in Richtung Bett gerichteten Oberfläche des Kernbereichs begrenzenden Grenzschicht, wobei die Grenzschicht eine Dentingrenze zwischen einem Zahnschmelz und einem Dentin nachbildet. Im Speziellen ist dabei die den Dentinkern bzw. die Dentingrenze nachbildende Farbabstufung von der Form her in einer gewissen Annäherung an die Realität hergestellt.

Ein Beispiel für einen solchen Rohling mit einer absichtlich hergestellten, relativ scharfen Dentingrenze sind die auf dem Markt erhältlichen sogenannten Vitablocs ®. Diese weisen meist eine Größe auf, die einem Zahn entspricht, sodass aus diesem Block ein einzelner Zahn bzw. ein Zahnersatz hergestellt werden kann.

Weiters ist aus dem Stand der Technik die US 4,970,032 bekannt, in welcher mehrfarbige dentale Rohlinge beschrieben werden, wobei ebenfalls einzelne Zähne hergestellt werden, welche unterschiedliche Farbabstufungen aufweisen.

Eine weitere Schrift, die einen vielfarbigen dentalen Formling zeigt, ist die WO 2008/083358 A1. Hierin ist wesentlich, dass die unterschiedlichen farbigen Zonen konzentrisch angeordnet sind.

Ein weiteres Schutzrecht mit einem formbaren Rohling mit unterschiedlichen Farben ist die WO 02/09612 A1.

Die DE 10 2013 203 750 A1 zeigt ein Verfahren zur Herstellung eines Zahnersatzteils. Dabei geht es um die Bereitstellung von Referenzdaten optischer Eigenschaften unterschiedlicher Dentinmaterialien und transluzenter Schmelzmaterialien des Zahnersatzteils. Daraus werden Sollwerte ermittelt, wonach ein Zahnersatzformblock mit gewünschter Grenzfläche mittels Materialabtragung ausgewählt und bereitgestellt wird.

Die DE 20 2009 018 724 U1 beschreibt einen Formkörper aus formstabilisiertem Material und ein Verfahren zu seiner Herstellung. Dabei geht es ganz allgemein darum, dass ein zweiter Bestandteil eine andere Pigmentierung als der erste Bestandteil aufweist und der zweite Bestandteil in den ersten Bestandteil unter Ausbildung einer Grenzfläche so angeordnet ist, dass die Grenzfläche eine räumlich gekrümmte Fläche (z.B. eine parabelförmige Grenzlinie) darstellt. Mithilfe einer Grafiksoftware werden die Grenzflächen der Schmelz-Dentin-Grenzschichten der Oberkiefer- und Unterkieferzähne zusammengelegt und so die Grenzflächenform generiert. Dies ist sehr aufwändig und muss praktisch für jeden einzelnen Rohling separat festgelegt und erzeugt werden.

Nachteilig bei den aus dem Stand der Technik bekannten Verfahren ist der relativ große Aufwand, vor allem wenn mehrere Teile eines Gebisses bzw. mehrere Zähne hergestellt werden sollen.

Die Aufgabe der vorliegenden Erfindung besteht daher darin, einen gegenüber dem Stand der Technik verbesserten Rohling zu schaffen. Insbesondere soll dieser Rohling die Herstellung eines Zahnersatzes vereinfachen und schneller machen.

Dies wird durch einen Rohling mit den Merkmalen von Anspruch 1 erreicht. Demnach ist erfindungsgemäß vorgesehen, dass der Rohling zumindest zwei separate Kernbereiche mit separaten, in Richtung Bett gerichteten Oberflächen aufweist. Somit ist es möglich, aus einem einzigen Rohling auf einfache Art und Weise auch mehrere Zähne, die jeweils eine sichtbare Dentingrenze aufweisen, herzustellen. Dadurch, dass die Kernbereiche und die in Richtung Bett gerichteten Oberflächen separat und somit beabstandet zueinander ausgebildet sind, können mehrere Zähne samt dem den Dentinkern nachbildenden Kernbereich und samt dem den Zahnschmelz nachbildenden Bett aus ein und demselben Rohling gefertigt werden. Vorteilhafte Weiterbildungen gehen aus den Unteransprüchen hervor.

Bevorzugt ist vorgesehen, dass zusätzlich zu der in Richtung Bett gerichteten Oberfläche jeder Kernbereich eine an die in Richtung Bett gerichtete Oberfläche anschließende und vom Bett abgewandte Basisfläche aufweist. Dabei ist besonders bevorzugt vorgesehen, dass jede Basisfläche in einer Basisebene liegt. Im Speziellen ist vorgesehen, dass die Basisflächen aller Kernbereiche voneinander beabstandet im Rohling angeordnet sind. Somit berühren sich diese Basisflächen nicht. Prinzipiell soll zwar nicht ausgeschlossen sein, dass sich manche der Basisflächen leicht oder zumindest bereichsweise berühren, bevorzugt ist jedoch vorgesehen, dass sich der Großteil dieser Basisflächen, bevorzugt alle Basisflächen, in einem Rohling gar nicht berühren und somit jeweils separat voneinander ausgebildet sind.

Um eine möglichst natürliche Form der Dentingrenze zu erreichen, ist bevorzugt vorgesehen, dass die in Richtung Bett gerichtete Oberfläche des Kernbereichs im Wesentlichen konvex ausgebildet ist.

Für die Herstellung des Rohlings gibt es im Prinzip zwei unterschiedliche Ausführungsbeispiele. Gemäß dem ersten Ausführungsbeispiel ist vorgesehen, dass die Basisflächen eine äußere Oberfläche des Rohlings mitbilden. Das heißt, die einzelnen Kernbereiche bzw. die Basisflächen dieser Kernbereiche sind an einer Seite der Oberfläche des Rohlings aufgrund der Verschiedenfarbigkeit zu erkennen, da sie dort die Oberfläche mitbilden.

Gemäß einem zweiten Ausführungsbeispiel kann allerdings alternativ auch vorgesehen sein, dass an die Basisflächen der Kernbereiche eine parallel zu den Basisflächen ausgerichtete Grundschicht aus einem vom ersten Material verschiedenen Material anschließt. Grundsätzlich können auch der Kernbereich und die Grundschicht aus zueinander verschiedenen Materialien bestehen. Dies vereinfacht vor allem die Herstellung, da das Material des Kernbereichs in bereits vorgefertigte Ausnehmungen im vorher spritzgegossenen Bett eingegossen werden kann. Besonders bevorzugt ist diesbezüglich vorgesehen, dass das zweite Material das vom ersten Material verschiedene Material bildet, wobei die Kernbereiche mit der Grundschicht einstückig ausgebildet sind. Die Grundschicht bildet somit eine Art Deckel für die im Bett eingebetteten Kernbereiche. Anders ausgedrückt lässt sich somit sagen, dass die in Richtung Bett gerichtete Oberfläche der Grundschicht an die Basisflächen der Kernbereiche und an eine in der Basisebene liegende Kontaktfläche des Betts angrenzt.

Es ist prinzipiell möglich, dass der Rohling aus drei oder mehreren verschiedenen Materialien besteht. Für eine einfache Produktion ist allerdings bevorzugt vorgesehen, dass der Rohling nur aus dem ersten Material und dem zweiten Material besteht.

Für die Nachahmung der Dentingrenze zwischen einem Zahnschmelz und einem Dentin bzw. Dentinkern ist es notwendig, dass die verwendeten Materialien verschiedenfarbig sind. Diese Verschiedenfarbigkeit kann durch verschiedene Methoden erreicht werden. Besonders bevorzugt ist dazu vorgesehen, dass das erste Material und das zweite Material eine zueinander unterschiedliche Pigmentierung aufweisen und/oder chemisch unterschiedlich ausgebildet sind und/oder eine zueinander unterschiedliche Dichte aufweisen. Die Art der Verschiedenfarbigkeit kann je nach Anwendungsfall entschieden werden.

Die Dentingrenze eines herzustellenden Zahnersatzes aus einem Rohling ist besonders dann mit dem Auge gut erkennbar, wenn die Grenzschicht innerhalb eines Bereichs verläuft der eine Dicke von weniger als 0,3 mm, insbesondere eine Dicke zwischen 0,001 und 0,2 mm, aufweist. Die Dicke kann also innerhalb dieses Bereichs variieren, vor allem in Abhängigkeit der verwendeten Materialien. Das heißt, je mehr der Kernbereich durch das Bett hindurchschimmert (je "durchsichtiger" also das Material des Bettes ist) desto weniger scharf und somit dicker kann die Grenzschicht ausgebildet sein. Je "undurchsichtiger" und weniger durchschimmernd das Material des Bettes ist, desto schärfer und weniger dick kann die Grenzschicht ausgebildet sein.

Die genaue Ausbildung der Grenzschicht hängt stark von den verwendeten Materialien ab. Die Materialien müssen so gewählt sein, dass bei der Herstellung ein guter Halt zwischen den beiden verwendeten Materialien besteht, sodass sich bei einer Bearbeitung in einer Bearbeitungs- bzw. Fräsmaschine der Kernbereich nicht vom Bett lösen kann. Dies kann einerseits dadurch garantiert werden, dass die Oberfläche des zuerst hergestellten Bettes relativ rau ist, sodass der später darin aushärtende Kernbereich aufgrund der Rauheit gut am Bett haftet, vorzugsweise durch Kunststoffspritzgießen mit dem Bett verbindet. Andererseits - vor allem wenn eine relativ geringe Oberflächenrauheit gegeben ist - kann auch vorgesehen sein, dass eine Mischung aus erstem Material und zweitem Material die Grenzschicht bildet. Das bedeutet, dass das erste Material mit dem zweiten Material bei der Herstellung zumindest teilweise verschmilzt und somit eine innige Verbindung über die dann vom Bett und von den Kernbereichen separate Grenz- bzw. Mischschicht vorhanden ist. Dies wird vorzugsweise dadurch erreicht, dass zuerst das Bett spritzgegossen wird. Anschließend wird auf das ganz oder erst teilweise ausgehärtete Bett der Kernbereich aufgespritzt. Bei beiden Varianten entsteht eine relativ scharfe Schmelze-Dentin-Grenze.

Die Kernbereiche können unterschiedliche Formen und Größen aufweisen. Bevorzugt ist vorgesehen, dass die im Wesentlichen konvexen Oberflächen der Kernbereiche zumindest bereichsweise zylinderförmig, kegelstumpfförmig oder im Querschnitt parabelförmig ausgebildet sind. Ein Kernbereich kann aber auch aus einer Kombination von mehreren Geometrien gebildet sein. So kann ein Dentinkern sich auch aus mehreren parabelförmigen Körpern zusammensetzen, damit man eine noch natürlichere Rekonstruktion erzeugen kann. Es ist auch möglich, dass in ein und demselben Rohling die unterschiedlichen konvexen Oberflächen der Kernbereiche zueinander unterschiedliche Formen aufweisen.

Um eine möglichst effiziente Herstellung von mehreren Einzelkonstruktionen oder auch größeren, mehrgliedrigen Zahnersatzteilen zu ermöglichen, ist bevorzugt vorgesehen, dass zumindest fünf, vorzugsweise zumindest acht, separate Kernbereiche im Rohling ausgebildet sind. Dabei ist bevorzugt vorgesehen, dass diese zumindest fünf Kernbereiche rasterförmig im Rohling angeordnet sind. Besonders bevorzugt ist allerdings vorgesehen, dass die zumindest fünf Kernbereiche zumindest zahngebissförmig im Rohling angeordnet sind. Im Idealfall sind somit zumindest zehn, zwölf oder vierzehn Kernbereiche jeweils zahngebissförmig angeordnet, wobei die Kernbereiche unterschiedliche Größen aufweisen, die an die Dentine eines natürlichen Gebisses von der Form und Größe her angenähert sind.

Für ein einfaches Einspannen des Rohlings in einer Bearbeitungs- bzw. Fräsmaschine ist bevorzugt vorgesehen, dass der Rohling scheibenförmig ausgebildet ist. Je nach Ausbildung der Bearbeitungsmaschine können aber auch andere Formen, wie beispielsweise quaderförmige Rohlinge, verwendet werden. Um auch ein sicheres und positionsgenaues Befestigen bzw. Einspannen in der Maschine zu ermöglichen, kann eine Aussparung, eine Erhebung, eine Bohrung oder dergleichen vorgesehen sein. So ist dann die genaue Position des Blockes (Rohling) in der Bearbeitungsmaschine bekannt. Da auch die Position der Kerne im Block definiert ist, ist auch die Position der Kerne relativ zur Maschine definiert und bekannt. Die Erfindung soll nicht auf die hier beschriebenen bzw. gezeigten Formen der Kernbereiche eingeschränkt sein, sondern es können alle beliebigen Formen vorgesehen sein.

Schutz wird auch begehrt für ein Verfahren zum Herstellen eines erfindungsgemäßen Rohlings in einem Kunststoffspritzgießprozess. Dabei wird zunächst das Bett in einer ersten Kavität eines Formwerkzeugs spritzgegossen bis es ausreichend ausgehärtet ist. Anschließend wird dieses ausgehärtete Bett in einer zweiten, größeren Kavität eines Formwerkzeugs eingesetzt, wobei in die verbleibende Kavität zwischen ausgehärtetem Bett und Formwerkzeug das zweite Material eingespritzt wird. Nach Aushärtung auch des zweiten Materials haften die beiden Materialien aneinander, das heißt sie sind durch das Spritzgießen miteinander verbunden. Dieser Rohling kann dann in einer Bearbeitungs- oder Fräsmaschine entsprechend gefräst werden.

Weitere Einzelheiten und Vorteile der vorliegenden Erfindung werden anhand der Figurenbeschreibung unter Bezugnahme auf die im Folgenden dargelegten Ausführungsbeispiele näher erläutert. Darin zeigen:
- Fig. 1 a-1 c: unterschiedliche Ansichten eines ersten Ausführungsbeispiels eines Rohlings,
- Fig. 2a-2c: unterschiedliche Ansichten eines zweiten Ausführungsbeispiels eines Rohlings,
- Fig. 3a-3c: unterschiedliche Anordnungen der Kernbereiche in einem Rohling,
- Fig. 4a, 4b: schematisch unterschiedliche Ausgestaltungen einer Grenzschicht zwischen Bett und Kernbereich,
- Fig. 5: einen Schnitt durch einen Rohling mit parabelförmigen Kernbereichen und
- Fig. 6: einen Schnitt durch einen Rohling mit unterschiedlich geformten Kernbereichen mitsamt virtuell eingeblendeten Zähnen.

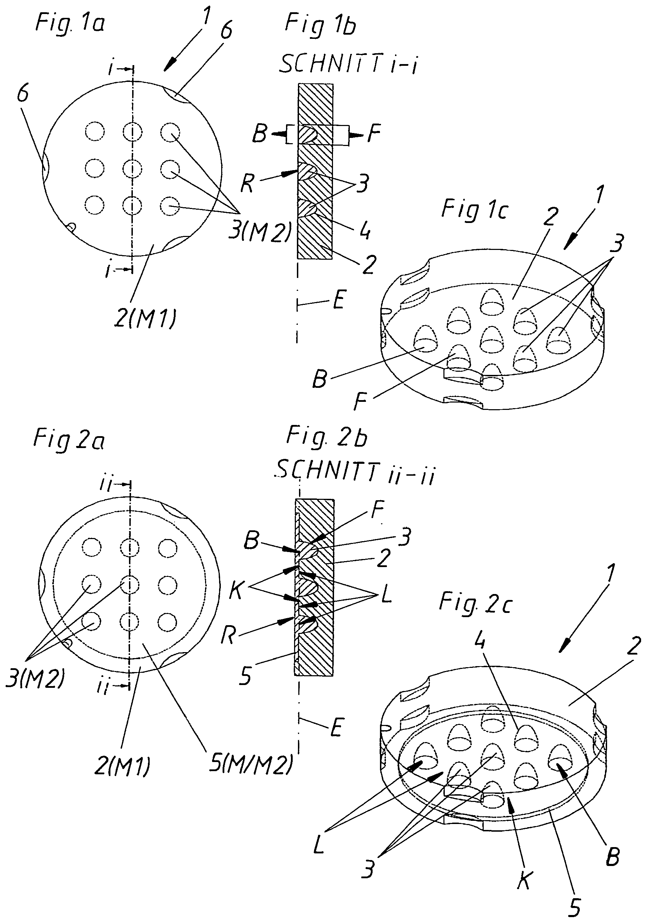

In Fig. 1 a ist eine Draufsicht auf einen Rohling 1 dargestellt, in welchem insgesamt neun Kernbereiche 3 ausgebildet sind. Diese Kernbereiche 3 bestehen aus einem zweiten Material M2. Die Kernbereiche 3 sind in ein Bett 2 aus einem ersten Material M1 eingebettet. An der äußeren Oberfläche R des Rohlings 1 sind Ausbuchtungen 6 ausgebildet, über welche der Rohling 1 in eine nicht dargestellte Bearbeitungs- bzw. Fräsmaschine eingespannt werden kann.

Im in Fig. 1b dargestellten Schnitt i-i ist die Ausgestaltung der Kernbereiche 3 und des Bettes 2 gut erkennbar, wobei der Rohling 1 in diesem Fall mehrere separate Kernbereiche 3 mit separaten, in Richtung Bett 2 gerichteten Oberflächen F aufweist. In dieser Ausführung ist die Oberfläche F gänzlich konvex ausgebildet. Diese Oberfläche F bildet gemeinsam mit der in Richtung Kernbereich 3 gerichteten Oberfläche des Bettes 2 die Grenzschicht 4. Der Kernbereich 3 weist als Oberfläche aber nicht nur die in Richtung Bett 2 gerichtete Oberfläche F sondern auch die vom Bett 2 abgewandte Basisfläche B auf. Diese Basisfläche B liegt in der Basisebene E. Alle Basisflächen B der Kernbereiche 3 sind voneinander beabstandet im Rohling 1 angeordnet und liegen in der Basisebene E. Bei diesem ersten Ausführungsbeispiel bildet die Basisfläche B die äußere Oberfläche R des Rohlings 1 mit.

In Fig. 1c sind perspektivisch dargestellt die insgesamt neun Kernbereiche 3 mit deren Basisflächen B und in Richtung Bett 2 gerichteten Oberflächen F ersichtlich.

In Fig. 2a ist eine Draufsicht auf ein zweites Ausführungsbeispiel des Rohlings 1 gezeigt. Dabei ist zusätzlich eine Grundschicht 5 vorgesehen, welche aus einem zum ersten Material M1 verschiedenen Material M, bevorzugt aus dem zweiten Material M2 besteht.

Wie aus dem in Fig. 2b gezeigten Schnitt ii-ii erkennbar, ist diese Grundschicht 5 einstückig mit den Kernbereichen 3 ausgebildet. Wiederum liegen aber - wie beim ersten Ausführungsbeispiel gemäß Fig. 1b - die vom Bett 2 abgewandten Basisflächen B allesamt auf derselben Basisebene E. Zudem liegen auf dieser Basisebene E die in Richtung Grundschicht 5 gerichteten Kontaktflächen K des Betts 2. An diese Kontaktflächen K grenzen die in Richtung Bett 2 gerichteten Oberflächen L der Grundschicht 5 an. Das heißt somit, dass die in Richtung Bett 2 gerichtete Oberfläche L der Grundschicht 5 sowohl die separat und voneinander beabstandet ausgebildeten Basisflächen B der Kernbereiche 3 als auch die Kontaktflächen K des Betts 2 kontaktiert. Alle diese Flächen L, B und K liegen in der Basisebene E. Gemäß dieser Fig. 2b bildet somit die vom Bett 2 abgewandte Oberfläche der Grundschicht 5 die äußere Oberfläche R des Rohlings 1 und nicht die Basisflächen B der Kernbereiche 3 wie beim ersten Ausführungsbeispiel.

In Fig. 2c ist durch die strichlierte Darstellung nochmals die Grundschicht 5 erkennbar, zudem blickt man praktisch von oben auf die Oberfläche der Grundschicht L, welche die Kontaktfläche K des Betts 2 und die Basisflächen B der Kernbereiche 3 in der Basisebene E kontaktiert.

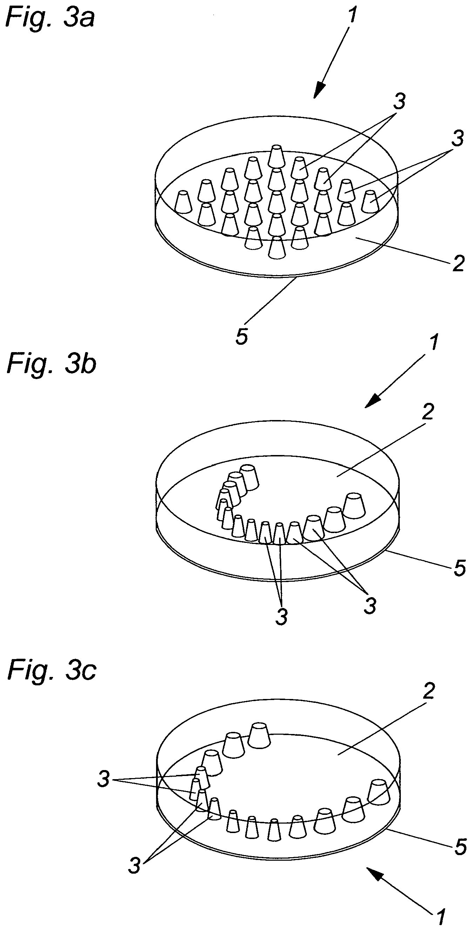

Aus den Fig. 3a bis 3c geht hervor, dass die Kernbereiche 3 im Rohling 1 unterschiedlich angeordnet sein können. Diese Formen können vorher, also vor der Herstellung der Rohlinge 1, definiert werden. Diese Kernbereiche 3 werden von dem Bett 2 umgeben. Die einzelnen Kernbereiche 3 bzw. deren Oberflächen F können feine Strukturen aufweisen wie sie in der Natur üblich sind. In Fig. 3a sind insgesamt fünfundzwanzig, im Wesentlichen identische Kernbereiche rasterförmig im Rohling 1 angeordnet. Gemäß den Fig. 3b und 3c sind jeweils vierzehn, teilweise unterschiedlich große Kernbereiche 3 gebissförmig angeordnet. In den Fig. 3a bis 3c sind alle Kernbereiche 3 im Wesentlichen kegelstumpfförmig ausgebildet. Natürlich können die Kernbereiche 3 auch davon abweichende Formen aufweisen.

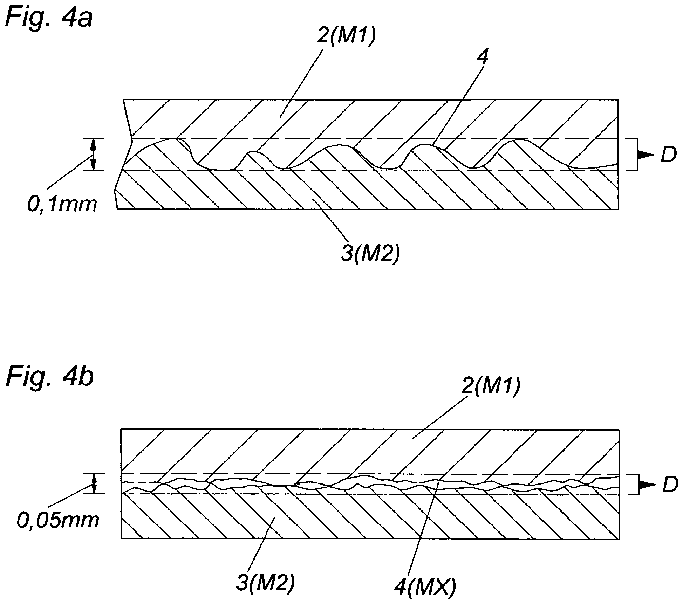

Fig. 4a zeigt einen schematischen Schnitt durch einen Teil des Rohlings 1. Im Speziellen ist hier ein Ausschnitt im Bereich der Grenzschicht 4 schematisch dargestellt. In diesem Fall ist die Oberflächenrauheit des ersten Materials M1 des Betts 2 relativ groß, was durch die relativ hohen Wellen schematisch angedeutet ist. Bei dieser relativ großen Oberflächenrauheit (mit einer Oberflächenrauheit Rₐ zwischen 10 und 15 µm, vorzugsweise von 12,5 µm) kann sich der Kernbereich 3 innig mit dem Bett 2 verbinden, ohne bzw. kaum ohne Verschmelzen bzw. Vermischen der Materialien M1 und M2. Somit ist die Grenzschicht 4 keine eigenständige Schicht sondern wird durch die aneinander anliegenden bzw. aneinander haftenden Flächen des Betts 2 und der Kernbereiche 3 gebildet. Diese Grenzschicht 4 verläuft nur für die bessere Veranschaulichung innerhalb eines Bereichs der eine Dicke D von weniger als 0,1 mm aufweist. In vielen Fällen ist die genaue Dicke D dieses Bereichs nicht eindeutig bestimmbar. Grundsätzlich ist es hierzu auch möglich, dass auch bei einer polierten Oberfläche mit einem Ra von weniger als 0,01 µm eine ausreichende Haftung im Bereich der Grenzschicht 4 gegeben ist. Dies hängt vor allem von den speziellen Anwendungsfällen ab.

Demgegenüber wurde gemäß Fig. 4b für das Bett 2 ein erstes Material M1 mit einer geringeren Oberflächenrauheit verwendet. Beim Einspritzen des zweiten Materials M2 für die Kernbereiche 3 verschmelzen die Materialien M1 und M2 zumindest teilweise miteinander, wodurch die Grenzschicht 4 aus einer Mischung MX zwischen erstem Material M1 und zweitem Material M2 gebildet ist. Dadurch ergibt sich eine innige Verbindung zwischen dem Bett 2 und den Kernbereichen 3. Die Grenzschicht verläuft bei dieser Ausführungsform in einem Bereich mit einer Dicke D von weniger als 0,05 mm. Da auch diese Dicke D nicht immer genau bestimmbar ist, dient dieser Abstand ebenfalls der besseren Veranschaulichung.

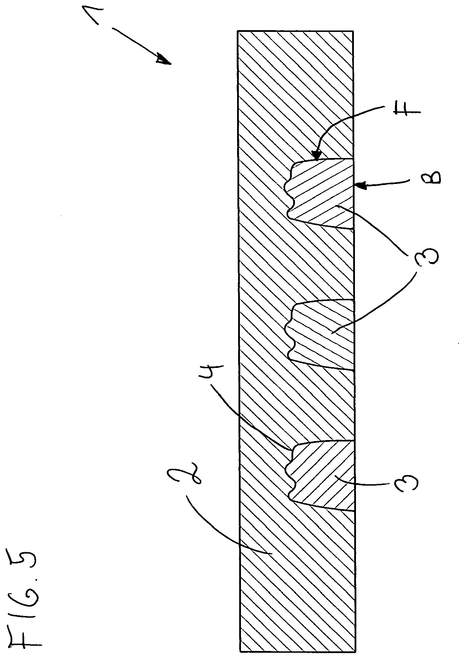

In Fig. 5 ist ein Schnitt durch einen Rohling 1 gezeigt, welcher ein Beispiel für eine mögliche Form der Kernbereiche 3 zeigt. Demgemäß setzt sich der Kernbereich 3 aus mehreren parabelförmigen Körpern zusammen. Diese Form ähnelt einer natürlichen Struktur eines Dentinkerns.

Für die Herstellung der Rohlinge 1 (Blöcke) wird bevorzugt ein Mehrkomponentenspritzgussverfahren verwendet. So ist es am besten möglich, dass man mehrere unterschiedliche Farben und Formen in einem Rohling 1 unterbringen kann. Theoretisch funktioniert das Herstellungsverfahren mit allen thermoplastischen Kunststoffen, welche in der verwendeten Paarung untereinander genügend Haftung aufweisen. Prinzipiell können aber auch Duroplaste verwendet werden. Bevorzugt werden allerdings thermoplastische Kunststoffe, wie beispielsweise Polymethylmethacrylat (PMMA), Polycarbonate (PC), Acrylnitril-Butadien-Styrol (ABS), Polyethlyen (PE), Polypropylen (PP), Polyetheretherketon (PEEK), Polyamid (PA) usw. verwendet. Dadurch entsteht ein Rohling 1 aus mindestens zwei verschiedenen Bestandteilen (Materialen M1 und M2), welche eine differente Farbe bzw. Pigmentierung aufweisen. Der Kernbereich 3 kann auch aus einem gänzlich anderen chemischen Material bestehen und nicht nur eine andere Pigmentierung aufweisen. So wäre es auch denkbar, Zweikomponentensilikon zu verwenden. Auch einen derartigen Rohling 1 aus keramischen Materialien (z. B. Zirkon) zu pressen ist nicht ausgeschlossen. Die Größe der einzelnen Kernbereiche 3 sollte in Wesentlichen an die natürliche Größe der bei natürlichen Zähnen vorkommenden Dentine angelehnt sein.

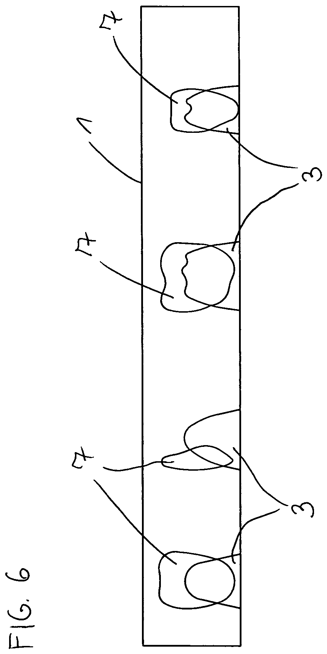

Die Bearbeitung eines erfindungsgemäßen Rohlings 1 kann über ein geeignetes Programm bzw. Software erfolgen. Dabei wird über diese Software ein virtueller Zahn 7 bzw. virtuelle Zähne 7 über die Kernbereiche 3 gelegt. Diese virtuellen Zähne 7 sind gut in Fig. 6 ersichtlich, wo über unterschiedlich geformte Kernbereiche 3 im Rohling 1 virtuell die herauszuarbeitenden Zähne entsprechend positioniert bzw. drübergelegt sind. Sobald diese virtuelle Ausgestaltung des Zahnes passend positioniert ist, werden über die Bearbeitungsmaschine die entsprechenden Zähne aus dem Rohling 1 herausgefräst (oder durch ein anderweitiges materialabtragendes Verfahren entsprechend bearbeitet). Die Zähne können dabei als Einzelzähne ausgeführt sein oder auch zusammenhängend herausgefräst werden. Je nachdem um welche Arbeit es sich handelt (Einzelarbeit oder mehrgliedrige Arbeit) kann der Rohling1 unterschiedliche aufgebaut sein. Bevorzugt ist der Rohling 1 dazu ausgelegt, mehrere Einzelarbeiten anfertigen zu können.

### Bezugszeichenliste:

- 1: Rohling
- 2: Bett
- 3: Kernbereiche
- 4: Grenzschicht
- 5: Grundschicht
- 6: Ausbuchtungen
- 7: virtuelle Zähne
- M1: erstes Material
- M2: zweites Material
- F: Oberfläche (Richtung Bett)
- B: Basisfläche
- E: Basisebene
- R: äußere Oberfläche
- M: von M1 verschiedenes Material
- L: Oberfläche der Grundschicht
- K: Kontaktfläche
- D: Dicke
- MX: Mischung

## Patentansprüche

1. Rohling (1), insbesondere Dentalrohling, zur Herstellung eines Zahnersatzes, mit
- einem Bett (2) aus einem ersten Material (M1),
- wenigstens einem, im Bett (2) eingebetteten, vom Bett (2) verschiedenfarbig ausgebildeten Kernbereich (3) aus einem zweiten Material (M2), wobei der Kernbereich (3) eine in Richtung Bett (2) gerichtete Oberfläche (F) aufweist, und
- einer das Bett (2) zu der in Richtung Bett (2) gerichteten Oberfläche (F) des Kernbereichs (3) begrenzenden Grenzschicht (4), wobei die Grenzschicht (4) eine Dentingrenze zwischen einem Zahnschmelz und einem Dentin nachbildet,
**dadurch gekennzeichnet, dass** der Rohling (1) zumindest zwei separate Kernbereiche (3) mit separaten, in Richtung Bett (2) gerichteten Oberflächen (F) aufweist.

2. Rohling nach Anspruch 1, **dadurch gekennzeichnet, dass** jeder Kernbereich (3) eine an die in Richtung Bett (2) gerichtete Oberfläche (F) anschließende und vom Bett (2) abgewandte Basisfläche (B) aufweist, wobei jede Basisfläche (B) in einer Basisebene (E) liegt und wobei die Basisflächen (B) aller Kernbereiche (3) voneinander beabstandet im Rohling (1) angeordnet sind.

3. Rohling nach Anspruch 1 oder 2, **dadurch gekennzeichnet, dass** die in Richtung Bett (2) gerichtete Oberfläche (F) des Kernbereichs (3) im Wesentlichen konvex ausgebildet ist.

4. Rohling nach Anspruch 2 oder 3, **dadurch gekennzeichnet, dass** die Basisflächen (B) eine äußere Oberfläche (R) des Rohlings (1) mitbilden.

5. Rohling nach Anspruch 2 oder 3, **dadurch gekennzeichnet, dass** an die Basisflächen (B) der Kernbereiche (3) eine parallel zu den Basisflächen (B) ausgerichtete Grundschicht (5) aus einem vom ersten Material (M1) verschiedenen Material (M) anschließt.

6. Rohling nach Anspruch 5, **dadurch gekennzeichnet, dass** das zweite Material (M2) das vom ersten Material (M1) verschiedene Material (M) bildet, wobei die Kernbereiche (3) mit der Grundschicht (5) einstückig ausgebildet sind.

7. Rohling nach Anspruch 5 oder 6, **dadurch gekennzeichnet, dass** die in Richtung Bett (2) gerichtete Oberfläche (L) der Grundschicht (5) an die Basisflächen (B) der Kernbereiche (3) und an eine in der Basisebene (E) liegende Kontaktfläche (K) des Betts (2) angrenzt.

8. Rohling nach einem der Ansprüche 1 bis 7, **dadurch gekennzeichnet, dass** der Rohling (1) nur aus dem ersten Material (M1) und dem zweiten Material (M2) besteht.

9. Rohling nach einem der Ansprüche 1 bis 8, **dadurch gekennzeichnet, dass** das erste Material (M1) und das zweite Material (M2) eine zueinander unterschiedliche Pigmentierung aufweisen und/oder chemisch unterschiedlich ausgebildet sind und/oder eine zueinander unterschiedliche Dichte aufweisen.

10. Rohling nach einem der Ansprüche 1 bis 9, **dadurch gekennzeichnet, dass** die Grenzschicht (4) innerhalb eines Bereichs verläuft der eine Dicke (D) von weniger als 0,3 mm, insbesondere eine Dicke (D) zwischen 0,001 und 0,2 mm, aufweist.

11. Rohling nach einem der Ansprüche 1 bis 10, **dadurch gekennzeichnet, dass** eine Mischung (MX) aus erstem Material (M1) und zweitem Material (M2) die Grenzschicht (4) bildet.

12. Rohling nach einem der Ansprüche 1 bis 11, **dadurch gekennzeichnet, dass** das - den Kernbereich (3) bildende - zweite Material (M2) im Bereich der Grenzschicht (4) am - das Bett (2) bildenden - ersten Material (M1) haftet.

13. Rohling nach einem der Ansprüche 1 bis 12, **dadurch gekennzeichnet, dass** die im Wesentlichen konvexen Oberflächen (F) der Kernbereiche (3) zumindest bereichsweise zylinderförmig, kegelstumpfförmig oder im Querschnitt parabelförmig ausgebildet sind.

14. Rohling nach einem der Ansprüche 1 bis 13, **dadurch gekennzeichnet, dass** zumindest fünf, vorzugsweise zumindest acht, separate Kernbereiche (3) im Rohling (1) ausgebildet sind.

15. *Verfahren zum Herstellen eines Rohlings (1) nach einem der Ansprüche 1 bis 14 in einem Kunststoffspritzgießprozess, mit den Schritten:*
- *Einspritzen des ersten Materials (M1) des Betts (2) in eine erste Kavität eines Formwerkzeugs,*
- *Aushärten des ersten Materials (M1) des Betts (2),*
- *Einsetzen des ausgehärteten Betts (2) in eine zweite, größere Kavität des Formwerkzeugs und*
- *Einspritzen des zweigen Materials (M2) in die verbleibende Kavität zwischen ausgehärtetem Bett (2) und Formwerkzeug.*

## Claims

1. A blank (1), in particular a dental blank, for the production of a tooth prosthesis, comprising
- a bed (2) of a first material (M1), and
- at least one core region (3) which is embedded in the bed (2) and which is of a different color from the bed (2) and comprises a second material (M2), wherein the core region (3) has a surface (F) directed in the direction of the bed (2), and
a boundary layer (4) delimiting the bed (2) relative to the surface (F) of the core region (3), that is directed in the direction of the bed (2), wherein the boundary layer (4) simulates a dentine boundary between a dental enamel and a dentine,
**characterised in that** the blank (1) has at least two separate core regions (3) with separate surfaces (F) directed in the direction of the bed.

2. A blank as set forth in claim 1 **characterised in that** each core region (3) has a base surface (B) which adjoins the surface (F) directed in the direction of the bed (2) and which faces away from the bed (2), wherein each base surface (B) lies in a base plane (E) and wherein the base surfaces (B) of all core regions (3) are arranged in mutually spaced relationship in the blank (1).

3. A blank as set forth in claim 1 or claim 2 **characterised in that** the surface (F) of the core region (3), that is directed in the direction of the bed (2), is substantially convex.

4. A blank as set forth in claim 2 or claim 3 **characterised in that** the base surfaces (M) also form an outer surface (R) of the blank (1).

5. A blank as set forth in claim 2 or claim 3 **characterised in that** adjoining the base surfaces (B) of the core regions (3) is a basic layer (5) which is oriented parallel to the base surfaces (B) and which comprises a material (M) different from the first material (M1).

6. A blank as set forth in claim 5 **characterised in that** the second material (M2) forms the material (M) which is different from the first material (M1), wherein the core regions (3) are in one piece with the basic layer (5).

7. A blank as set forth in claim 5 or claim 6 **characterised in that** the surface (L) of the basic layer (5), that is directed in the direction of the bed (2), adjoins the base surfaces (B) of the core regions (3) and a contact surface (K) of the bed (2), that lies in the base plane (E).

8. A blank as set forth in one of claims 1 through 7 **characterised in that** the blank (1) comprises only the first material (M1) and the second material (M2).

9. A blank as set forth in one of claims 1 through 8 **characterised in that** the first material (M1) and the second material (M2) are of mutually different pigmentation and/or are of chemically different nature and/or are of mutually different density.

10. A blank as set forth in one of claims 1 through 9 **characterised in that** the boundary layer (4) extends within a range of a thickness (D) of less than 0.3 mm, in particular a thickness of between 0.001 and 0.2 mm.

11. A blank as set forth in one of claims 1 through 10 **characterised in that** a mixture (MX) of first material (M1) and second material (M2) forms the boundary layer (4).

12. A blank as set forth in one of claims 1 through 11 **characterised in that** the second material (M2) forming the core region (3) adheres in the region of the boundary layer (4) to the first material (M1) forming the bed (2).

13. A blank as set forth in one of claims 1 through 12 **characterised in that** the substantially convex surfaces (F) of the core regions (3) are at least region-wise cylindrical, frustoconical or parabolic in cross-section.

14. A blank as set forth in one of claims 1 through 13 **characterised in that** at least five, preferably at least eight, separate core regions (3) are provided in the blank (1).

15. A process for the production of a blank (1) as set forth in one of claims 1 through 14 in a plastic injection molding process, comprising the steps:
- injecting a first material (M1) of the bed (2) in a first cavity of a mold tool,
- hardening of the first material (M1) of the bed (2),
- inserting of the hardened bed (2) in a second larger cavity of the mold tool and
- injecting the second material (M2) in the remaining cavity between the hardened bed (2) and the mold tool.

## Revendications

1. Ébauche (1), plus particulièrement ébauche dentaire, pour la fabrication d'une prothèse dentaire, avec
- un lit (2) composé d'une première matière (M1),
- au moins une zone centrale (3), encastrée dans le lit (2), conçue de couleur différente du lit, composée d'une deuxième matière (M2), la zone centrale (3) présentant une surface (F) orientée dans le sens du lit (2), et
- une couche limite (4) délimitant le lit (2) par rapport à la surface (F), orientée dans le sens du lit (2), de la zone centrale (3), la couche limite (4) imitant une limite de dentine entre un émail et une dentine,
**caractérisée en ce que** l'ébauche (1) présente au moins deux zones centrales (3) distinctes avec des surfaces (F) distinctes, orientées dans le sens du lit (2).

2. Ébauche selon la revendication 1, **caractérisée en ce que** chaque zone centrale (3) présente une surface de base (B) contiguë à la surface (F) orientée dans le sens du lit (2) et opposée au lit (2), dans laquelle chaque surface de base (B) se trouve dans un plan de base (E) et dans laquelle les surfaces de base (B) de toutes les zones centrales (3) sont disposées à distance dans l'ébauche (1).

3. Ébauche selon la revendication 1 ou 2, **caractérisée en ce que** la surface (F), orientée dans le sens du lit (2), de la zone centrale (3) est conçue essentiellement convexe.

4. Ébauche selon la revendication 2 ou 3, **caractérisée en ce que** les surfaces de base (B) forment ensemble une surface extérieure (R) de l'ébauche (1).

5. Ébauche selon la revendication 2 ou 3, **caractérisée en ce que** se raccorde aux surfaces de base (B) des zones centrales (3) une couche de base (5), orientée parallèlement aux surfaces de base (B), composée d'une matière (M) différente de la première matière (M1).

6. Ébauche selon la revendication 5, **caractérisée en ce que** la deuxième matière (M2) forme la matière (M) différente de la première matière (M1), dans laquelle les zones centrales (3) sont conçues d'une seule pièce avec la couche de base (5).

7. Ébauche selon la revendication 5 ou 6, **caractérisée en ce que** la surface (L), orientée dans le sens du lit (2), de la couche de base (5) touche les surfaces de base (B) des zones centrales (3) et une surface de contact (K) du lit (2), située dans le plan de base (E).

8. Ébauche selon l'une des revendications 1 à 7, **caractérisée en ce que** l'ébauche (1) se compose uniquement de la première matière (M1) et de la deuxième matière (M2).

9. Ébauche selon l'une des revendications 1 à 8, **caractérisée en ce que** la première matière (M1) et la deuxième matière (M2) présentent une pigmentation différente l'une de l'autre et / ou sont conçues chimiquement différentes et / ou présentent une densité différente.

10. Ébauche selon l'une des revendications 1 à 9, **caractérisée en ce que** la couche limite (4) passe à l'intérieur d'une zone qui présente une épaisseur (D) inférieure à 0,3 mm, en particulier une épaisseur (D) située entre 0,001 et 0,2 mm.

11. Ébauche selon l'une des revendications 1 à 10, **caractérisée en ce qu'**un mélange (MX) d'une première matière (M1) et d'une deuxième matière (M2) forme la couche limite (4).

12. Ébauche selon l'une des revendications 1 à 11, **caractérisée en ce que** la deuxième matière (M2) - formant la zone centrale (3) - adhère dans la zone de la couche limite (4) à la première matière (M1) - formant le lit (2).

13. Ébauche selon l'une des revendications 1 à 12, **caractérisée en ce que** les surfaces (F) essentiellement convexes des zones centrales (3) sont conçues au moins par endroits de forme cylindrique, à cône tronqué ou de forme parabolique en section transversale.

14. Ébauche selon l'une des revendications 1 à 13, **caractérisée en ce qu'**au moins cinq, de préférence au moins huit, zones centrales (3) distinctes sont conçues dans l'ébauche (1).

15. Procédé de fabrication d'une ébauche (1) selon l'une des revendications 1 à 14 dans un processus de moulage par injection de matière synthétique, comportant les étapes :
- d'injection d'une première matière (M1) du lit (2) dans une première cavité d'un outil de formage,
- de durcissement de la première matière (M1) du lit (2),
- de mise en place du lit durci (2) dans une deuxième cavité plus grande de l'outil de formage et
- d'injection de la deuxième matière (M2) dans la cavité restante entre le lit durci (2) et l'outil de formage.
